# EUROPÄISCHE PATENTANMELDUNG

(11) **EP 3 466 229 A1**
(43) Veröffentlichungstag der Anmeldung: **10.04.2019**
(21) Anmeldenummer: 18181127.4
(22) Anmeldetag: 02.07.2018
(51) Int. Cl.: A01B 61/04

(54) **BODENBEARBEITUNGSGERÄT MIT ÜBERLASTSICHERUNG**

(30) Priorität: 05.10.2017 DE 102017123138; 03.01.2018 DE 102018100079
(71) Anmelder: PÖTTINGER Landtechnik GmbH, 4710 Grieskirchen (AT)
(72) Erfinder: Preimeß, Hans-Jörg, 9811 Lendorf (AT)
(74) Vertreter: Thoma, Michael

(57) **Zusammenfassung**

Die vorliegende Erfindung betrifft ein Bodenbearbeitungsgerät mit einer Überlastsicherung, wobei zumindest ein Bodenbearbeitungswerkzeug an einem Werkzeugträger befestigt ist, der an einem Rahmenteil zwischen einer Arbeitsstellung und einer Ausweichstellung verschwenkbar gelagert und von einem Hydraulikzylinder in die Arbeitsstellung vorgespannt ist. Erfindungsgemäß besitzt der als Mehrfachzylinder ausgebildete Hydraulikzylinder mehrere auf eine gemeinsame Kolbenstange wirkende Kolben und ist direkt an dem in die Ausweichstellung verschwenkbaren Werkzeugträger einerseits und an dem diesen Werkzeugträger lagernden Rahmenteil angelenkt.

## Beschreibung

Die vorliegende Erfindung betrifft ein Bodenbearbeitungsgerät mit einer Überlastsicherung, wobei zumindest ein Bodenbearbeitungswerkzeug an einem Werkzeugträger befestigt ist, der an einem Rahmenteil zwischen einer Arbeitsstellung und einer Ausweichstellung verschwenkbar gelagert und von einem Hydraulikzylinder in die Arbeitsstellung vorgespannt ist.

Bodenbearbeitungsgeräte mit Bodenwerkzeugen, die bestimmungsgemäß in den Boden bzw. das Erdreich eintauchen, um ihre Arbeit zu verbringen, müssen gegen Fremdkörper im Boden mit einer Überlastsicherung vor Beschädigungen gesichert werden. Solche Bodenbearbeitungsgeräte können insbesondere Pflüge, Grubber oder Eggen sein, deren Werkzeuge den Boden zerschneiden, wenden, auflockern, zerkrümeln oder in anderer Weise bearbeiten. Fährt beispielsweise ein Pflug mit einer Pflugschar gegen einen im Erdreich eingebetteten Stein, muss die Pflugschar ausweichen können, um Beschädigungen an der Pflugschar oder deren Aufhängung zu vermeiden. Ähnliches gilt für die Zinken eines Grubbers oder die Scheiben einer Egge.

Hierzu ist es bekannt, den Werkzeugträger, an dem das zumindest eine Bodenbearbeitungswerkzeug befestigt ist, schwenkbar an einem Rahmenteil zu lagern, sodass der Werkzeugträger und das daran befestigte Bodenbearbeitungswerkzeug wegschwenken können, wenn auf einen Stein oder ein ähnliches Hindernis aufgefahren wird. Um andererseits zu verhindern, dass der Werkzeugträger mit dem daran befestigten Bodenbearbeitungswerkzeug ungewollt unter der normalen Arbeitsbelastung aus der Arbeitsstellung in die Ausweichstellung zu verschwenken, kann der Werkzeugträger mittels eines Hydraulikzylinders in die Arbeitsstellung vorgespannt werden. Da beispielsweise beim Bearbeiten harter oder wurzeliger Böden sehr hohe, reguläre Bodenbearbeitungskräfte auftreten können, die noch nicht zu einem Ausweichen des Bodenbearbeitungswerkzeuges führen sollen, muss der Hydraulikzylinder sehr hohe Vorspannkräfte bereitstellen, insbesondere wenn aufgrund einer schlanken Bauweise des Werkzeugträgers nur ein kleiner Reaktionshebelarm zur Verfügung steht.

Die genannten Werkzeugträger sind oft längliche, schlanke Trägerstrukturen, die an einem Hauptrahmen befestigt sind und mit ihrem auskragenden Ende das Bodenbearbeitungswerkzeug tragen. Ist das Bodenbearbeitungsgerät als Wendegerät ausgebildet, beispielsweise in Form eines Wendepflugs, können an dem länglichen, schlanken Werkzeugträger auch zwei Bodenbearbeitungswerkzeuge befestigt sein, die sich auf gegenüberliegenden Seiten des Werkzeugträgers erstrecken und zusammen mit den Werkzeugträgern gewendet werden können. Bei solchen Wendegeräten ist je nach Wendestellung einmal das eine Bodenbearbeitungswerkzeug und in der gewendeten Stellung das gegenüberliegende andere Bodenbearbeitungswerkzeug im Bodeneingriff, sodass der Werkzeugträger je nach Wendestellung zu gegenüberliegenden Seiten hin ausweichen muss, wenn auf ein Hindernis aufgefahren wird.

Dabei steht zum Hauptrahmen hin nur wenig Bauraum zur Verfügung, sodass der Hydraulikzylinder, der den Werkzeugträger in seine Arbeitsstellung vorspannt, keinen großen Hebelarm bezüglich der Schwenkachse, um die der Werkzeugträger in die Ausweichstellung schwenken kann, besitzen kann. Vom begrenzten Bauraum abgesehen ist ein solcher begrenzter Hebelarm auch hilfreich, um bei nur begrenztem Stellweg des vorspannenden Hydraulikzylinders eine ausreichende Schwenkbewegung in die Ausweichstellung zu ermöglichen.

Um die benötigten, hohen Vorspannkräfte bereitstellen zu können, werden bisweilen Hydraulikzylinder mit recht großen Durchmessern verwendet, was jedoch die Anordnung des Hydraulikzylinders bei nur begrenztem Bauraum erschwert. Da solche dicken Hydraulikzylinder außerhalb des ausweichenden Werkzeugträgerprofils anzuordnen sind, können Kollisionsprobleme bei weiteren Verstellbarkeiten, beispielsweise beim Verschwenken des Werkzeugträgers zur Schnittbreitenverstellung, die Folge sein. Regelmäßig werden kraftübertragende Zusatzelemente wie Zugstangen erforderlich, um die Vorspannkraft des Hydraulikzylinders auf den gewünschten Kraftangriffspunkt geben zu können, der aus den vorgenannten Gründen häufig sehr nahe an dem Schwenklager zu liegen hat.

Um solche Hydraulikzylinder mit großen Durchmessern zu vermeiden, wurde auch bereits angedacht, den Hydraulikzylinder über einen Hebelmechanismus an dem Werkzeugträger bzw. dem Rahmenteil anzulenken und dabei die Hebelverhältnisse so zu wählen, dass die vom Hydraulikzylinder bereitgestellte Kraft eine Übersetzung bzw. Verstärkung erfährt und die resultierende Vorspannkraft, mit der der Werkzeugträger in seiner Arbeitsstellung vorgespannt wird, deutlich größer ist als die tatsächlich vom Hydraulikzylinder bereitgestellte Zylinderkraft. Derartige Hebelmechanismen benötigen jedoch wieder zusätzlichen Bauraum. Zudem bringen die vielen Drehpunkte einer solchen indirekten Anlenkung durch ein Hebelsystem bei der üblicherweise geforderten Wartungsfreiheit einen hohen Verschleiß in den Drehpunkten und reduzieren die Lebensdauer des Systems beträchtlich. Ferner sind solche Hebelumlenksysteme oft recht kompliziert aus vielen Einzelteilen aufgebaut, was die Montage komplex macht und die Wartung unüberschaubar erscheinen lässt.

Einen Wendepflug mit einer Überlastsicherung für die Pflugschare zeigen beispielsweise die Schriften EP 2 944 168 A1 und EP 2 952 079 A1, wobei hier jeweils der zwei Pflugschare tragende Werkzeugträger an einem Rahmenteil schwenkbar gelagert ist, sodass der Werkzeugträger aus einer Arbeitsstellung - je nachdem, welche Pflugschar im Betrieb ist - zu gegenüberliegenden Seiten hin in eine Ausweichstellung verschwenken kann. Die Vorspannung des Werkzeugträgers in die Arbeitsstellung wird durch einen Hydraulikzylinder aufgebracht, der entlang des Werkzeugträgers an dessen Außenseite angeordnet ist und über einen Hebelmechanismus eine Zugstange beaufschlagt, die die Vorspannkraft überträgt.

Eine ähnliche Überlastsicherung für einen Pflug ist aus der Schrift DE 42 320 67 A1 bekannt, wobei hier der die Vorspannung bewirkende Hydraulikzylinder an dem auskragenden Ende des Werkzeugträgerprofils koaxial zu diesem angeordnet ist und den die Vorspannkraft übertragenden Zuganker direkt beaufschlagt. Durch die Anordnung des Hydraulikzylinders am freien Ende des ausschwenkbaren Werkzeugträgers, das heißt der Hydraulikzylinder ist hinter dem Befestigungspunkt des Bodenbearbeitungswerkzeugs angeordnet bzw. liegt der Befestigungsabschnitt des Bodenbearbeitungswerkzeuges am Werkzeugträger zwischen der schwenkbaren Lagerung des Werkzeugträgers am Rahmenteil und dem genannten Hydraulikzylinder, kann zwar der Durchmesser des Hydraulikzylinders vergrößert werden, ohne mit den Befestigungselementen für das Bodenbearbeitungswerkzeug zu kollidieren. Andererseits wird aber die Länge des Vorspannsystems und des Werkzeugträgers mit dem daran anschließenden Hydraulikzylinder sehr groß.

Die EP 1 856 965 B1 zeigt einen Wendepflug mit einem T-förmigen Werkzeugträger, an dem zu gegenüberliegenden Seiten hin angeordnete Pflugschare befestigt sind, wobei der Werkzeugträger schwenkbar an einem Rahmenteil gelagert ist, um beim Anfahren an Hindernisse ausweichen zu können. Ein im Bereich der Verzweigung des T-förmigen Werkzeugträgers angeordneter Hydraulikzylinder zum Erzeugen der Vorspannkraft ist über zwei separate Gelenkshebel an dem Rahmenteil angelenkt, über die beim Ausweichen des Werkzeugträgers eine Stellbewegung des Hydraulikzylinders erzwungen wird. Der Hebelmechanismus ist jedoch relativ kompliziert aufgebaut und sieht im Bereich der Verbindung zum Hydraulikzylinder für jeden Stellhebel des Gelenkhebelmechanismus eine Aufnahmetasche vor, aus der ein jeweils nicht aktiver Hebel herausrutschen kann, wenn der Werkzeugträger zur anderen Seite hin ausweicht. Der Hebelmechanismus ist nicht nur relativ komplex mit vielen Einzelteilen und Gelenkspunkten aufgebaut, sondern im Bereich der Aufnahmetaschen auch besonders verschleißanfällig.

Der vorliegenden Erfindung liegt daher die Aufgabe zugrunde, ein verbessertes Bodenbearbeitungsgerät der eingangs genannten Art zu schaffen, das Nachteile des Standes der Technik vermeidet und letzteren in vorteilhafter Weise weiterbildet. Insbesondere soll bei kompakter, platzsparender Anordnung und verschleißarmer Bauweise eine ausreichend hohe Vorspannkraft bereitgestellt werden, die den Werkzeugträger mit dem daran befestigten Bodenbearbeitungswerkzeug auch bei schwierigen Bearbeitungsverhältnissen wie beispielsweise harten Böden sicher in der Arbeitsstellung hält und nur beim tatsächlichen Auffahren auf Hindernisse ein Ausweichen zulässt.

Erfindungsgemäß wird die genannte Aufgabe durch ein Bodenbearbeitungsgerät gemäß Anspruch 1 gelöst. Bevorzugte Ausgestaltungen der Erfindung sind Gegenstand der abhängigen Ansprüche.

Es wird also vorgeschlagen, für die Überlastsicherung zum Vorspannen des Werkzeugträgers mit dem daran befestigten Bodenbearbeitungswerkzeug in die bestimmungsgemäße Arbeitsstellung einen Mehrfachzylinder zu verwenden und diesen direkt ohne Zwischenschaltung von Hebelmechanismen an dem Werkzeugträger einerseits und dem Rahmenteil andererseits anzulenken. Durch die Ausbildung als Mehrfachzylinder können auch bei kleinem Durchmesser bzw. kleiner Dicke des Hydraulikzylinders sehr hohe Stellkräfte bereitgestellt werden, sodass auf Hebelmechanismen zur Stellkrafterhöhung verzichtet und eine ausreichend große Vorspannung in die Arbeitsstellung auch bei direkter Anlenkung des Hydraulikzylinders an den verschwenkbaren Werkzeugträger und das diesen lagernden Rahmenteil erzielt werden kann. Durch die direkte Anlenkung können der Verschleiß in den diversen Gelenkpunkten eines Hebelmechanismus vermieden und die Montage und Wartung der Überlastsicherung vereinfacht werden. Erfindungsgemäß besitzt der als Mehrfachzylinder ausgebildete Hydraulikzylinder mehrere auf eine gemeinsame Kolbenstange wirkende Kolben und ist direkt an dem in die Ausweichstellung verschwenkbaren Werkzeugträger einerseits und an dem diesen Werkzeugträger lagernden Rahmenteil angelenkt. Durch die mehreren auf eine gemeinsame Kolbenstange wirkenden Kolben multipliziert sich sozusagen die effektive Querschnittsfläche des Hydraulikzylinders, ohne dass hierzu der tatsächliche Durchmesser bzw. - bei unrunder Ausbildung - Dicke des Hydraulikzylinders im Vergleich zu einem Einfachzylinder entsprechend zunehmen würde, sodass bei direkter Anlenkung des Hydraulikzylinders und entsprechend kompaktem Einbau trotzdem ausreichende Vorspannkräfte bereitstellbar sind.

In vorteilhafter Weiterbildung der Erfindung kann der Hydraulikzylinder zumindest teilweise von dem Werkzeugträger umschlossen sein. Insbesondere kann der Werkzeugträger zumindest abschnittsweise als Hohlprofil ausgebildet und der Hydraulikzylinder in einem von dem Hohlprofil umschlossenen Innenraum aufgenommen sein. Durch eine solche Integration des Hydraulikzylinders der Überlastsicherung in den bei Ausweichbewegungen verschwenkenden Werkzeugträger kann nicht nur eine kompakte, kollisionsarme Anordnung erreicht, sondern auch ein Schutz des Hydraulikzylinders vor Verschmutzung und Beschädigungen durch Steinschlag erzielt werden. Gleichzeitig wird eine potenzielle Verletzungsgefahr durch Einklemmen vermieden.

Das genannte Hohlprofil des Werkzeugträgers muss dabei nicht vollständig geschlossen sein. Beispielsweise kommt eine geschlitzte Ausbildung ähnlich einem U-Profil in Betracht, das eine Aufnahmeschale für den Hydraulikzylinder bildet. Der Werkzeugträger kann aber auch nach Art eines Rohrs ein im Querschnitt geschlossenes Hohlprofil bilden, in dessen Innenraum der Hydraulikzylinder aufgenommen ist.

Gegebenenfalls kann der Hydraulikzylinder an einem Ende oder auch an beiden Enden ein Stück aus dem Hohlprofil des Werkzeugträgers herausstehen, beispielsweise mit seiner Kolbenstange oder dem daran angeformten Lagerauge. Vorteilhafterweise der Hydraulikzylinder jedoch vollständig einschließlich seiner Kolbenstange und seins Zylinders und den daran angeformten Schwenklageraugen bzw. -elementen im Inneren des Werkzeugträgers aufgenommen sein.

Der genannte Werkzeugträger kann dabei vorteilhafterweise eine insgesamt betrachtete längliche, schlanke Konturierung besitzen, deren Querschnitt über einen größeren Abschnitt nach Art eines Rohres gleichbleiben kann. Vorteilhafterweise kann der den Hydraulikzylinder aufnehmende Werkzeugträger aber auch einen sich über seine Länge ändernden Querschnitt besitzen, insbesondere zum Schwenklagerende, das an dem Rahmenteil schwenkbar gelagert ist, eine Querschnittsvergrößerung besitzen und/oder zum Befestigungspunkt des Bodenbearbeitungswerkzeugs hin eine Querschnittserweiterung besitzen.

Die Länge des Hydraulikzylinders kann näherungsweise der Länge des schwenkbaren Werkzeugträgers entsprechen, beispielsweise im Bereich von 75% bis 120% der Länge des Werkzeugträgers betragen. Insbesondere kann der Hydraulikzylinder in der Arbeitsstellung des Werkzeugträgers eine Länge aufweisen, die im Wesentlichen der Länge des Werkzeugträgers entspricht. Der Hydraulikzylinder kann hierdurch vollständig im Inneren des Werkzeugträgers aufgenommen sein und gleichzeitig dessen Länge im Wesentlichen vollständig ausnutzen.

Vorteilhafterweise kann der Hydraulikzylinder in Längsrichtung in den Werkzeugträger einschiebbar sein. Hierzu kann der Werkzeugträger ein zum Rahmenteil hin offenes Ende aufweisen, sodass der Hydraulikzylinder über dieses offene Ende in den Werkzeugträger hineinschiebbar ist. Alternativ oder zusätzlich kann der Werkzeugträger auch an seinem dem Rahmenteil abgewandten Endabschnitt offen ausgebildet sein und/oder durch ein Deckelteil verschließbar sein, sodass der Hydraulikzylinder von der dem Rahmenteil gegenüberliegenden Ende her in den Werkzeugträger einschiebbar ist. Das genannte Deckelteil kann dabei ein Anlenkelement bilden oder aufweisen, an dem der Hydraulikzylinder an dem Werkzeugträger anlenkbar bzw. abstützbar ist. Hierzu kann das genannte Deckelteil starr am Werkzeugträger befestigbar sein, beispielsweise mittels einer Bolzenverbindung. Alternativ kann die Anlenkung des Hydraulikzylinders an dem Werkzeugträger aber auch unabhängig von einem solchen Deckelteil erfolgen.

Der Hydraulikzylinder besitzt vorteilhafterweise einen Zylinderteil, dessen Innenraum in mehrere Zylinderkammern unterteilt ist, in welchen Zylinderkammern die genannten mehreren Kolben aufgenommen sind. Die Kolbenstange durchtritt dabei die genannten mehreren Zylinderkammern sowie auch zumindest eine Zwischentrennwand zwischen zwei benachbarten Zylinderkammern, sodass die mehreren Kolben starr an der gemeinsamen Kolbenstange befestigbar sind.

Der Anlenkpunkt des Hydraulikzylinders an dem Rahmenteil kann vorteilhafterweise sehr nahe an dem Schwenklager liegen, durch das der Werkzeugträger gegenüber dem Rahmenteil in die Ausweichstellung verschwenken kann. Beispielsweise kann die Beabstandung des rahmenteilseitigen Anlenkpunkts des Hydraulikzylinders von dem genannten Schwenklager weniger als 50% oder auch weniger als 30% der Länge des Hydraulikzylinders in dessen Arbeitsstellung betragen.

Besonders vorteilhaft ist die Verwendung des genannten Mehrfachzylinders mit direkter Anlenkung an dem Werkzeugträger und dem Rahmenteil bei einer Ausbildung des Bodenbearbeitungsgerätes als Wendegerät, bei dem an dem genannten Werkzeugträger zwei Bodenbearbeitungsgeräte befestigt sind, die sich zu gegenüberliegenden Seiten des Werkzeugträgers hin erstrecken, wobei durch Wenden des Rahmens des Bodenbearbeitungsgeräts wahlweise das eine oder das andere der beiden genannten Bodenbearbeitungswerkzeuge in eine Arbeitsstellung und in Eingriff mit dem Boden gebracht werden kann.

Bei einem solchen Wendegerät kann der genannte Werkzeugträger insgesamt betrachtet eine annäherungsweise T-förmige Ausbildung besitzen, bei der der zentrale Hauptschenkel schwenkbar an dem Rahmenteil angelenkt ist und die beiden quer abgehenden Seitenschenkel jeweils ein Bodenbearbeitungswerkzeug tragen.

Die Schwenkbarkeit des Werkzeugträgers an dem Rahmenteil ist dabei derart beschaffen, dass der Werkzeugträger aus der neutralen Arbeitsstellung in entgegengesetzte Richtungen jeweils in eine Ausweichstellung schwenkbar ist, um beiden Bodenbearbeitungswerkzeugen ein Ausweichen zu ermöglichen. Eine solche gegenläufige Schwenkbarkeit kann grundsätzlich durch ein zentrales Schwenklager erreicht werden. Vorteilhafterweise aber kann der Werkzeugträger mit zwei Schwenklagern an dem Rahmenteil angelenkt werden, die voneinander beabstandet sind. Um eine kompakte Bauweise zu erzielen, kann der Hydraulikzylinder dabei derart angeordnet sein, dass sich eine Längsachse des Hydraulikzylinders etwa mittig zwischen den beiden Schwenklagern hindurch erstreckt. Insbesondere kann ein rahmenteilseitiger Anlenkpunkt des Hydraulikzylinders etwa mittig zwischen den beiden Schwenklagern angeordnet sein.

Die genannten Schwenklager können hierbei vorteilhafterweise jeweils einen translatorischen Freiheitsgrad besitzen, sodass beim Verschwenken des Werkzeugträgers um ein erstes der beiden Schwenklager das andere Schwenklager auf einem Kreisbogen um das erste Schwenklager bewegbar ist und bei Verschwenken des Werkzeugträgers um das zweite der beiden Schwenklager das genannte erste Schwenklager auf einem Kreisbogen um das zweite Schwenklager verfahren kann.

In vorteilhafter Weiterbildung der Erfindung können die Schwenklager jeweils einen Schwenklagerbolzen aufweisen, der in einer Schwenklagergabel aufnehmbar und verdrehbar ist und gleichzeitig aus der Schwenklagergabel herausfahrbar ist, um die vorgenannte translatorische Freiheit zu ermöglichen. Der Hydraulikzylinder kann dabei dazu vorgesehen sein, beide Schwenklager mit ihren Schwenklagerbolzen in die jeweils zugehörige Schwenklagergabel vorzuspannen.

Die Beabstandung der beiden Schwenklager voneinander kann deutlich kleiner als die Länge des Werkzeugträgers und/oder des Hydraulikzylinders sein, wobei die Beabstandung der beiden Schwenklager voneinander beispielsweise weniger als 75% oder weniger als 50% oder auch weniger als 25% der Länge des Hydraulikzylinders in dessen Arbeitsstellung betragen kann.

Um die Vorspannung der Überlastsicherung, die einem Ausweichen entgegenwirkt, an verschiedene Bodenverhältnisse und/oder verschiedene Bearbeitungsparameter wie Fahrgeschwindigkeit oder Arbeitstiefe variabel anpassen zu können, kann in vorteilhafter Weise die Stellkraft des Hydraulikzylinders variabel eingestellt werden. Beispielsweise kann für härtere und/oder steinigere Böden oder allgemein Böden, die bei bestimmungsgemäßer Bodenbearbeitung höhere Widerstandskräfte an dem Bodenbearbeitungswerkzeug induzieren, eine höhere Vorspannkraft eingestellt werden als bei der Bearbeitung von weicheren Böden bzw. Böden, deren Bearbeitung geringere Reaktionskräfte an den Bodenbearbeitungswerkzeugen induziert. Alternativ oder zusätzlich kann die Vorspannkraft auch in Abhängigkeit der Arbeitstiefe gewählt werden, beispielsweise für größere Arbeitstiefen höher eingestellt werden als für kleinere Arbeitstiefen.

Die Verstellbarkeit der Vorspannkraft kann hierbei in unterschiedlicher Weise realisiert sein. Eine Verstellvorrichtung zum Verstellen der Vorspannkraft kann beispielsweise eine Druckeinstellvorrichtung zum Verstellen des den Hydraulikzylinder beaufschlagenden Hydraulikdrucks umfassen. Eine solche Druckeinstellvorrichtung kann beispielsweise ein hinsichtlich des Drucks einstellbaren Druckspeicher umfassen. Alternativ oder zusätzlich zu einer Verstellung des Hydraulikdrucks kann die Einstellvorrichtung auch eine Ventileinrichtung umfassen, die die Beaufschlagung mit mehreren Druckkammern des Mehrfachzylinders mit Hydraulikdruck steuern kann dergestalt, dass einmal mehr und einmal weniger Druckkammern mit dem Druck beaufschlagt werden. Sind beispielsweise drei Kolben in drei separaten Zylinderkammern aufgenommen und mit der gemeinsamen Kolbenstange starr verbunden, kann die volle Vorspannkraft bei Beaufschlagung aller drei Zylinderkammern, etwa zwei Drittel der vollen Vorspannkraft bei Beaufschlagung von nur zwei der drei Druckkammern und etwa ein Drittel der vollen Vorspannkraft bei Beaufschlagen nur einer der drei Druckkammern erzielt werden. Hierzu kann an einer oder auch mehrerer Druckkammern eine Ventileinrichtung vorgesehen sein, die die Druckbeaufschlagung von einer Druckquelle her absperrt oder auf die jeweilige Druckkammer durchschaltet.

Alternativ oder zusätzlich zu einem solchen Sperrventil kann auch zumindest ein Drosselventil Verwendung finden, um den von einer Druckquelle her anstehenden Systemdruck auf einen gewünschten, in der jeweiligen Zylinderkammer anstehenden Kammerdruck herunterzusteuern, um eine entsprechende Reduzierung der Vorspannkraft zu erzielen.

Die Erfindung wird nachfolgend anhand eines bevorzugten Ausführungsbeispiels und zugehöriger Zeichnungen näher erläutert. In den Zeichnungen zeigen:
- Fig. 1:: eine schematische, perspektivische Teilschnittansicht eines Werkzeugträgers eines Bodenbearbeitungsgeräts, dessen Anlenkung an ein Rahmenteil über zwei Schwenklager und den im Inneren des Werkzeugträgers aufgenommenen Hydraulikzylinder der Überlastsicherung, der den Werkzeugträger bezüglich der beiden Schwenklager vorspannt,
- Fig. 2:: eine Draufsicht auf den als Mehrfachzylinder ausgebildeten Hydraulikzylinder aus Fig. 1,
- Fig. 3:: eine Längsschnittansicht entlang der Linie A-A in Fig. 2, die die mehreren Kolben des Hydraulikzylinders zeigt, die an einer gemeinsamen Kolbenstange befestigt und in separaten Zylinderkammern des Zylinders aufgenommen sind, und
- Fig. 4:: eine Seitenansicht des Werkzeugträgers aus Fig. 1, die die daran befestigten Bodenbearbeitungswerkzeuge in Form von Pflugscharen sowie die Befestigung des Rahmenteils an einem Wenderahmenträger zeigt, um die gegenläufige Verschwenkbarkeit des Werkzeugträgers aus einer neutralen Arbeitsstellung in zwei Ausweichstellungen zu verdeutlichen.

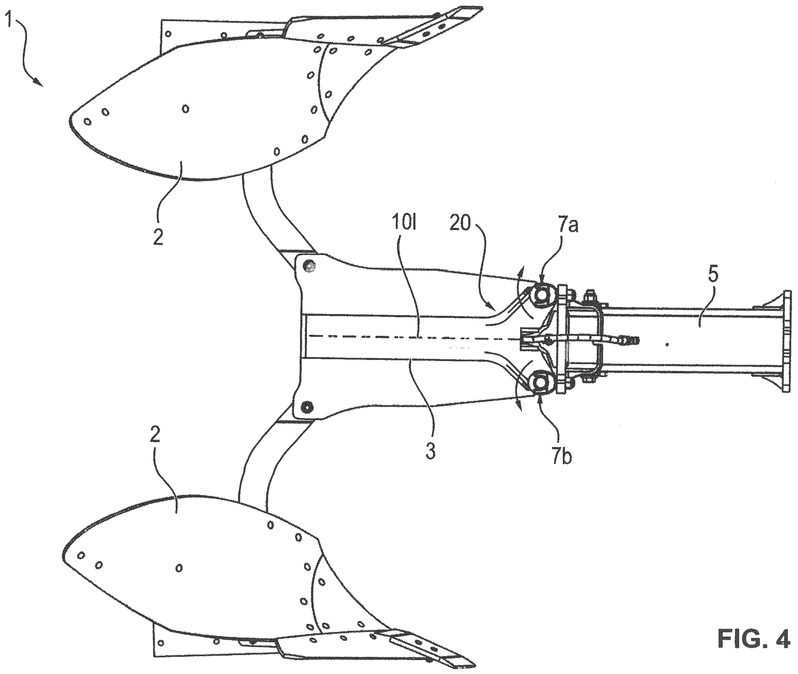

Wie Fig. 4 zeigt, kann das Bodenbearbeitungsgerät 1 beispielsweise als Pflug, insbesondere Wendepflug ausgebildet sein und als Bodenbearbeitungswerkzeuge 2 Pflugschare umfassen. Das Bodenbearbeitungsgerät 1 kann hiervon unabhängig als Anbaugerät ausgebildet sein, das zum Anbau an einen Schlepper eine nicht eigens gezeigte Anbauvorrichtung aufweist. Auch wenn Fig. 4 nur ein Paar Bodenbearbeitungswerkzeuge 2 zeigt, versteht es sich, dass entlang eines ebenfalls nicht näher gezeigten Hauptrahmens eine Vielzahl von Bodenbearbeitungswerkzeugen 2 bzw. Paaren von Bodenbearbeitungswerkzeugen 2 in Reihe zueinander angeordnet sein können.

Wie Fig. 4 weiterhin verdeutlicht, können die Bodenbearbeitungswerkzeuge 2 paarweise an einem Werkzeugträger 3 befestigt sein, wobei die Bodenbearbeitungswerkzeuge 2 zu gegenüberliegenden Seiten des Werkzeugträgers 3 hin angeordnet sein können. Um wahlweise das eine Bodenbearbeitungswerkzeug 2 oder das andere Bodenbearbeitungswerkzeug 2 mit dem Boden in Eingriff zu bringen, kann der genannte Werkzeugträger 3 über ein Rahmenteil 4 an einem Wenderahmenteil 5 aufgehängt sein, welches um eine liegende, beispielsweise in Fahrtrichtung weisende Achse gewendet und zwischen zwei Wendestellungen hin und her geschwenkt werden kann.

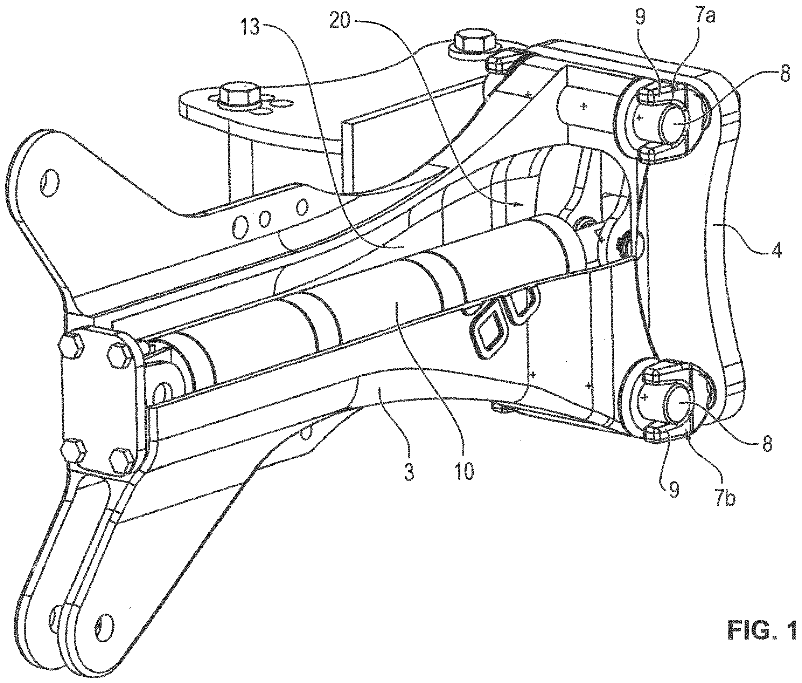

Wie die Figuren 1 und 4 zeigen, ist der genannte Werkzeugträger 3 dabei um eine liegende Schwenkachse, die sich quer zur Längsachse des Werkzeugträgers erstreckt, schwenkbar an dem Rahmenteil 4 angelenkt, sodass der Rahmenteil 4 zusammen mit dem daran befestigten Bodenbearbeitungswerkzeug 2, das bestimmungsgemäß in der Erde arbeitet, nach oben schwenken kann, wenn das Bodenbearbeitungswerkzeug 2 an ein Hindernis wie beispielsweise einen Stein anfährt. Die Ausweichbewegung aus der in Fig. 4 gezeigten Arbeitsstellung in eine Ausweichstellung ist dabei durch den Pfeil 6 gekennzeichnet, wobei in Fig. 4 zwei gegenläufige Pfeile 6 eingetragen sind, da nach einem Wenden des Bodenbearbeitungsgeräts die Ausweichbewegung sozusagen spiegelbildlich in die gegenläufige Richtung erfolgen würde.

Wie die Figuren 1 und 4 zeigen, können hierbei zwischen dem Werkzeugträger 3 und dem Rahmenteil 4 zwei voneinander beabstandete Schwenklager 7 vorgesehen sein, die zueinander parallele Schwenkachsen definieren und voneinander beabstandet sein können. Insbesondere können die Schwenklager 7 jeweils liegende Schwenkachsen quer zur Längsachse des Werkzeugträgers 3 definieren.

Die beiden Schwenklager 7 können hierbei einen translatorischen Freiheitsgrad besitzen, der ein Ausreißen der Schwenklager ermöglicht. Genauer gesagt kann bei Verschwenken des Werkzeugträgers 3 um das erste Schwenklager 7a aus der Arbeitsstellung in eine erste Ausweichstellung das zweite Schwenklager 7b eine kreisbogenförmige Bewegung um das erste Schwenklager 7a herum ausführen. Verschwenkt umgekehrt der Werkzeugträger 3 um das zweite Schwenklager 7b, um aus der Arbeitsstellung in eine zweite Ausweichstellung auszuweichen, kann das erste Schwenklager 7a sich auf einer Kreisbahn um das zweite Schwenklager 7b herum bewegen.

Hierzu können die beiden Schwenklager 7 jeweils einen Schwenklagerbolzen 8 aufweisen, der in einer Schwenklagergabel 9 schwenkbar aufgenommen ist und sich darin verdrehen kann. Zusätzlich kann der genannte Schwenklagerbolzen 8 sich in der Schwenklagergabel 9 in der genannten Weise translatorisch bewegen bzw. sich aus der genannten Schwenklagergabel 9 herausbewegen.

Um den Werkzeugträger 3 im normalen Arbeitsbetrieb in der in Fig. 1 und 4 gezeigten Arbeitsstellung zu halten und ein ungewolltes Ausweichen zu vermeiden, ist der Werkzeugträger 3 durch einen Hydraulikzylinder 10 gegenüber dem Rahmenteil 4 vorgespannt. Durch die Vorspannkraft, die von dem Hydraulikzylinder 10 aufgebracht wird, wird der Werkzeugträger 3 gegen einen Anschlag gefahren und die Verschwenkbarkeit bezüglich der Schwenklager 7 blockiert. Genauer gesagt kann ein Verschwenken des Werkzeugträgers 3 gegenüber dem Rahmenteil nur unter Überwindung der Vorspannkraft und einer damit einhergehenden Längenänderung des Hydraulikzylinders 10 erfolgen.

Wie die Figuren 1 und 4 zeigen, spannt der Hydraulikzylinder 10 den Werkzeugträger 3 im Wesentlichen entlang dessen Längserstreckung frontal gegen den Rahmenteil 4 und/oder die beiden Schwenkbolzen 8 der beiden Schwenklager 7 in die Schwenklagergabeln 9 hinein, deren Bodenkontur jeweils einen Anschlag für die Schwenklagerbolzen 8 bildet.

Der genannte Hydraulikzylinder 10 ist dabei vorteilhafterweise direkt an dem genannten Werkzeugträger 3 und dem genannten Rahmenteil 4 angelenkt, sodass die Stellkraft des Hydraulikzylinders 10 ohne Übersetzungen durch einen Hebelmechanismus und ohne Übertragung durch separate Zugstangen oder dergleichen direkt auf den Werkzeugträger 3 einerseits und das Rahmenteil 4 andererseits bzw. starr hiermit verbundene Anbauteile wirkt. Der Rahmenteil 4 und der Werkzeugträger 3 besitzen jeweils ein Anlenkelement, insbesondere in Form eines Anlenkgelenks, zum Anlenken des Hydraulikzylinders 10, wobei einerseits dessen Kolbenstange 11 und andererseits dessen Zylinderkorpus daran angelenkt sein können. In der gezeichneten Ausführung gemäß Fig. 1 ist die Kolbenstange 11 an dem Rahmenteil 4 angelenkt, während der Zylinderkorpus 12 an dem Werkzeugträger 3 angelenkt ist. Die Anlenkung kann aber umgekehrt werden, ohne dass dies eigens gezeigt wäre, wobei dann die Kolbenstange 11 am Werkzeugträger 3 und der Zylinderkorpus 12 am Rahmenteil 4 angelenkt ist.

Der Hydraulikzylinder 10 kann sich vorteilhafterweise etwa koaxial zu dem insgesamt länglich ausgebildeten Werkzeugträger 3 erstrecken, wobei ein Anlenkpunkt des Hydraulikzylinders 10 an dem Rahmenteil 4 vorteilhafterweise etwa mittig zwischen den beiden Schwenklagern 7 angeordnet sein kann.

Der Hydraulikzylinder 10 kann hierbei vorteilhafterweise sich im Wesentlichen über die gesamte Länge des Werkzeugträgers 3 erstrecken, wobei ein Anlenkpunkt des Hydraulikzylinders 10 an dem Werkzeugträger 3 an dessen dem Rahmenteil 4 abgewandten Endabschnitt angeordnet sein kann.

Wie Fig. 1 zeigt, ist der Hydraulikzylinder 10 vorteilhafterweise im Inneren des Werkzeugträgers 3 angeordnet. Der Werkzeugträger 3 kann hierbei als Hohlprofil ausgebildet sein, das einen Innenraum 13 umschließt, in dem der genannte Hydraulikzylinder 10 im Wesentlichen vollständig aufgenommen ist.

Der Hydraulikzylinder 10 ist vorteilhafterweise als Mehrfachzylinder ausgebildet, bei dem mehrere Kolben 14 gemeinsam auf die Kolbenstange 11 einwirken und gemeinsam versuchen, die Kolbenstange 11 gegenüber dem Zylinderkorpus 12 zu verschieben. Die genannten Kolben 14 können dabei starr an der gemeinsamen Kolbenstange 11 befestigt sein.

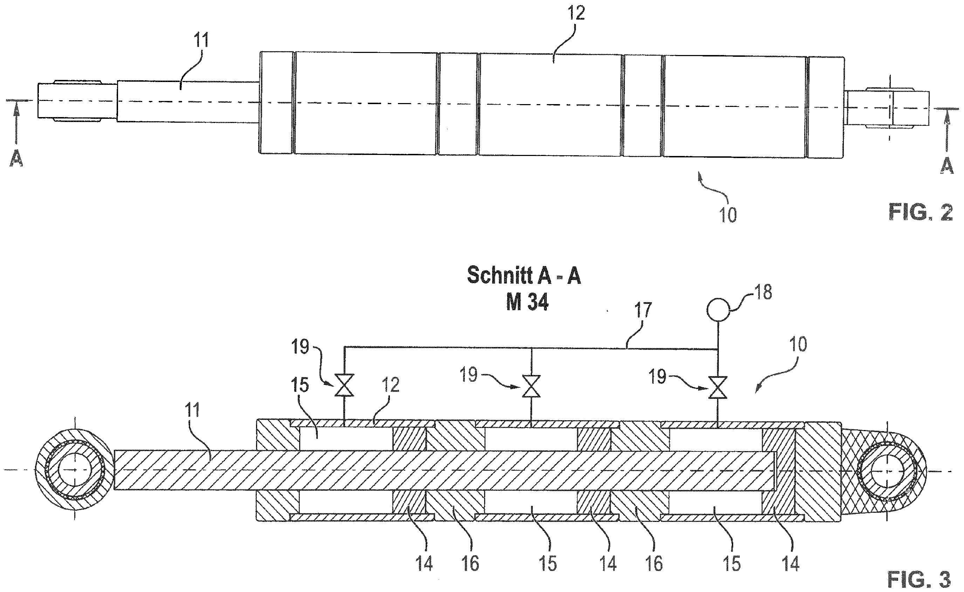

Wie Fig. 3 zeigt, kann der Zylinderkorpus 12, genauer gesagt dessen Innenraum, in mehrere separate Zylinderkammern 15 unterteilt sein, in denen jeweils einer der Kolben 14 verschieblich aufgenommen ist. Die gemeinsame Kolbenstange 11 tritt dabei durch die genannten mehreren Zylinderkammern 15 hindurch und ist in jeder Zylinderkammer 15 mit einem der Kolben 14 verbunden. Die Kolbenstange 11 kann dabei auch die Trennwände 16 zwischen benachbarten Zylinderkammern 15 durchdringen, wobei zwischen den Trennwänden 16 und der Kolbenstange 11 Dichtungen vorgesehen sein können, um die Zylinderkammern 15 abzudichten.

Die Zylinderkammern 15 können über Druckleitungen 17 von einer gemeinsamen Druckquelle 18 her oder auch von mehreren separaten Druckquellen her druckbeaufschlagt werden, wobei die zumindest eine Druckquelle vorteilhafterweise einstellbar hinsichtlich des bereitstellbaren Drucks ausgebildet sein kann, sodass verschieden hohe Drücke auf die Zylinderkammern 15 gegeben werden können.

Alternativ oder zusätzlich können eine oder mehrere der Zylinderkammern 15 von der Druckbeaufschlagung abgesperrt werden und/oder der Druck zu zumindest einer Zylinderkammer 15 hin reduziert werden, beispielsweise über ein oder mehrere Absperr- und/oder Druckminderungsventile 19, um die von dem Hydraulikzylinder 10 bereitgestellte Vorspannkraft variabel einstellen zu können.

## Patentansprüche

1. Bodenbearbeitungsgerät mit einer Überlastsicherung (20), wobei zumindest ein Bodenbearbeitungswerkzeug (2) an einem Werkzeugträger (3) befestigt ist, der an einem Rahmenteil (4) zwischen einer Arbeitsstellung und einer Ausweichstellung verschwenkbar gelagert und von einem Hydraulikzylinder (10) in die Arbeitsstellung vorgespannt ist, **dadurch gekennzeichnet, dass** der Hydraulikzylinder (10) als Mehrfachzylinder, der mehrere auf eine gemeinsame Kolbenstange (11) wirkende Kolben (14) umfasst, ausgebildet ist, wobei der Hydraulikzylinder (10) direkt an dem Werkzeugträger (3) einerseits und dem Rahmenteil (4) andererseits angelenkt ist.

2. Bodenbearbeitungsgerät nach dem vorhergehenden Anspruch, wobei der Hydraulikzylinder (10) zumindest teilweise von dem Werkzeugträger (3) umschlossen ist.

3. Bodenbearbeitungsgerät nach dem vorhergehenden Anspruch, wobei der Werkzeugträger (3) zumindest abschnittsweise als Hohlprofil ausgebildet ist und der Hydraulikzylinder (10) in einem von dem Hohlprofil umschlossenen Innenraum aufgenommen ist.

4. Bodenbearbeitungsgerät nach einem der vorhergehenden Ansprüche, wobei das Bodenbearbeitungsgerät als Wendegerät ausgebildet ist, wobei an dem Werkzeugträger (3) zwei sich auf gegenüberliegende Seiten des Werkzeugträgers (3) erstreckende Bodenbearbeitungswerkzeuge (2) befestigt sind, wobei der Werkzeugträger (3) an dem Rahmenteil (4) aus der genannten Arbeitsstellung zu gegenüberliegenden Seiten hin in zwei Ausweichstellungen verschwenkbar gelagert ist.

5. Bodenbearbeitungsgerät nach dem vorhergehenden Anspruch, wobei an dem Werkzeugträger (3) zwei voneinander beabstandete Schwenklager (7) vorgesehen sind und der Hydraulikzylinder (10) sich mit seiner Längsachse (101) zwischen den Schwenklagern (7) erstreckend angeordnet ist.

6. Bodenbearbeitungsgerät nach dem vorhergehenden Anspruch, wobei die Schwenklager (7) jeweils einen translatorischen Freiheitsgrad besitzen, sodass beim Verschwenken des Werkzeugträgers (3) um ein erstes der beiden Schwenklager (7a) das zweite Schwenklager (7b) auf einem Kreisbogen um das erste Schwenklager (7a) bewegbar und beim Verschwenken des Werkzeugträgers (3) um das zweite der beiden Schwenklager (7b) das erste Schwenklager (7a) auf einem Kreisbogen um das zweite Schwenklager (7b) bewegbar ist.

7. Bodenbearbeitungsgerät nach einem der beiden vorhergehenden Ansprüche, wobei die Schwenklager (7) jeweils einen Schwenklagerbolzen (8) umfassen, der in einer Schwenklagergabel (9) aufnehmbar, verschwenkbar und verschiebbar ist, wobei der Hydraulikzylinder (10) beide Schwenklager (7) mit ihren Schwenklagerbolzen (8) in die Schwenklagergabel (9) hinein vorspannt.

8. Bodenbearbeitungsgerät nach einem der vorhergehenden Ansprüche 5-7, wobei der Hydraulikzylinder (10) einen Anlenkpunkt an dem Rahmenteil (4) im Wesentlichen mittig zwischen den beiden Schwenklagern (7) aufweist.

9. Bodenbearbeitungsgerät nach einem der vorhergehenden Ansprüche, wobei die mehreren Kolben (14) starr an der gemeinsamen Kolbenstange (11) befestigt sind und ein Zylinderkorpus (12) des Hydraulikzylinders (10) einen in mehrere Zylinderkammern (15) unterteilten Innenraum (13) aufweist, in welchen Zylinderkammern (15) die genannten mehreren Kolben aufgenommen sind.

10. Bodenbearbeitungsgerät nach einem der vorhergehenden Ansprüche, wobei der Hydraulikzylinder (10) zwischen zwei und sechs Kolben aufweist.

11. Bodenbearbeitungsgerät nach einem der vorhergehenden Ansprüche, wobei eine Verstellvorrichtung (21) zum Verstellen der Vorspannkraft des Hydraulikzylinders (10) eine Druckeinstellvorrichtung (22) zum Verstellen des den Hydraulikzylinder (10) beaufschlagenden Hydraulikdrucks umfasst.

12. Bodenbearbeitungsgerät nach dem vorhergehenden Anspruch, wobei die Druckeinstellvorrichtung (22) eine Ventileinrichtung (23) zum individuellen Absperren und/oder Reduzieren des einen Kolben oder eine Untergruppe der Kolben beaufschlagenden Drucks aufweist, sodass zumindest ein Kolben (14) mit einem höheren Druck und zumindest ein weiterer Kolben (14) mit einem geringerem oder keinem Druck beaufschlagbar ist.

13. Bodenbearbeitungsgerät nach einem der beiden vorhergehenden Ansprüche, wobei die Druckeinstellvorrichtung (25) eine bezüglich des bereitgestellten Drucks variabel einstellbare Druckquelle (18) umfasst.

14. Bodenbearbeitungsgerät nach einem der vorhergehenden Ansprüche, wobei sich der Hydraulikzylinder (10) im Wesentlichen parallel, insbesondere koaxial, zu dem Werkzeugträger (3) erstreckt und eine Länge besitzt, die 50% bis 125% oder 50% bis 100% der Länge des Werkzeugträgers (3) entspricht.

15. Bodenbearbeitungsgerät nach einem der vorhergehenden Ansprüche, wobei ein senkrechter Abstand der Schwenkachse zwischen Werkzeugträger (3) und Rahmenteil (4) von der Längsachse (101) des Hydraulikzylinders (10) weniger als 50% oder weniger als 30% der Länge des Hydraulikzylinders (10) in dessen Arbeitsstellung beträgt.
